Europäisches Patentamt

European Patent Office

Office européen des brevets

(11) Veröffentlichungsnummer: **0 302 069 B1**

(19)

(12) # EUROPÄISCHE PATENTSCHRIFT

(45) Veröffentlichungstag der Patentschrift: **19.02.92**

(51) Int. Cl.⁵: **H02K 3/47**

(21) Anmeldenummer: **87902388.5**

(22) Anmeldetag: **09.04.87**

(86) Internationale Anmeldenummer:
**PCT/DE87/00162**

(87) Internationale Veröffentlichungsnummer:
**WO 87/06400 (22.10.87 87/23)**

(54) ANORDNUNG ZUR BEFESTIGUNG EINER LUFTSPALTWICKLUNG UND VERFAHREN ZU IHRER MONTAGE UND DEMONTAGE.

(30) Priorität: **16.04.86 DE 3612819**

(43) Veröffentlichungstag der Anmeldung:
**08.02.89 Patentblatt 89/06**

(45) Bekanntmachung des Hinweises auf die Patenterteilung:
**19.02.92 Patentblatt 92/08**

(84) Benannte Vertragsstaaten:
**CH DE FR LI**

(56) Entgegenhaltungen:
**FR-A- 253 376
FR-A- 2 331 184
FR-A- 2 401 539
GB-A- 2 055 253
US-A- 3 157 939**

(73) Patentinhaber: **SIEMENS AKTIENGESELL-SCHAFT
Wittelsbacherplatz 2
W-8000 München 2(DE)**

(72) Erfinder: **BÖER, Joachim
Wedauerstrasse 2a
W-4330 Mülheim (Ruhr)(DE)**
Erfinder: **SOMMER, Fritz
Markenstrasse 30
W-4330 Mülheim (Ruhr)(DE)**

## Beschreibung

Die Erfindung bezieht sich auf eine Anordnung zur Befestigung einer Luftspaltwicklung am Innenumfang des Ständerblechpaketes von dynamoelektrischen Maschinen großer Leistung, insbesondere von Turbogeneratoren, gemäß Oberbegriff des Anspruchs 1.

Eine solche Anordnung ist durch die DE-PS 29 24 863 bekannt. Dabei sind die einzelnen Nutsegment-Stabgruppen durch maschinenaxial sich erstreckende Druckleisten abgedeckt, und im Zwischenraum zwischen zwei tangential zueinander benachbarten Druckleisten sind über die Blechpaketelänge verteilte radiale Spannschrauben im Bereich der Nutenzähne angeordnet, welche in Verankerungsstellen des Blechpaketes eingeschraubt sind. Letztere bestehen z.B aus mit radialen Gewindebohrungen versehene, außen isolierte Axialbolzen, welche in entsprechende Axialbohrungen des Blechpaketes eingeschoben sind. An ihrem äußeren Ende greifen die Spannschrauben mittels maschinenaxial sich erstreckender Halteleisten am Seitenbereich der beiden tangential benachbarten Druckleisten an. Bei dieser bekannten Anordnung ist somit der Zahnbereich durch die Spannschrauben für die Radialverspannung belegt. Eine Tangential-Verspannung ist in der genannten DE-PS nicht erwähnt; es wäre indessen möglich, durch Einfügen geeigneter Keile in den Verband der Nutsegment-Stabgruppen einen Teil der radialen Spannkräfte in tangentiale Spannkräfte umzuformen. Jedoch wären dann die Mittel zur radialen und zur tangentialen Verspannung der Luftspaltwicklung innerhalb der jeweiligen Stabaufnahmenuten nicht unabhängig voneinander.

Das Gleiche gilt für eine weitere gattungsgemäße Anordnung zur Befestigung einer Luftspaltwicklung nach der DE-AS 21 65 678. Dort wird zur radialen Verspannung der in die Nuten einer Nut-Zahnanordnung eingelegten Ständerwicklungsstäbe ein Isolierzylinder in die Ständerbohrung des Ständerblechpaketes eingebracht, wobei unterstellt werden muß, daß die Ständerwicklungsstäbe in ihrem eingelegten Zustand noch einen gewissen radialen Überstand über die Nutzähne aufweisen, so daß durch den eingefügten Isolierzylinder die Stäbe gegen den Nutgrund gepreßt werden können, und zwar soweit, bis der Außenumfang des Isolierzylinders an den Zahnköpfen anliegt. Das Montieren bzw. Demontieren eines sich über die gesamte Blechpaketlänge erstreckenden Isolierzylinders, welcher zum Aufbringen der erforderlich radialen Verspannkräfte eine gewisse Wandstärke aufweisen muß, gestaltet sich sehr schwierig. Ferner gilt, wie angedeutet, daß mit dem Isolierzylinder nur eine Radialverspannung bewirkt wird, und, würde man durch geeignete Keile auch tangentiale Verspannkräfte erzeugen, könnte man radiale und tangentiale Verspannung nicht unabhängig voneinander einstellen.

Der Erfindung liegt die Aufgabe zugrunde, die gattungsgemäße Anordnung zur Befestigung einer Luftspaltwicklung so auszubilden, daß der Bereich der axialen Flucht der Nutzähne so von Spannelementen für die betriebsmäßige Radialverspannung der Wicklung freigehalten oder zumindest so ausgebildet werden kann, daß die Möglichkeit geschaffen wird, in diesem Bereich separat einstellbare Spannelemente zur Tangentialverspannung unterzubringen. Es sollen erhebliche radiale Spannkräfte auf der gesamten Innenumfangsfläche der Nutsegment-Stabgruppen bzw. der Stäbe der Luftspaltwicklung aufgebracht werden können, und auch diese Kräfte sollen einstellbar sein. Die neue Halteeinrichtung soll dabei innerhalb des mechanischen Luftspalts wenig Raum beanspruchen sowie leicht zu montieren, zu prüfen und gegebenenfalls bei einer Revision nachzuspannen sein.

Erfindungsgemäß wird die gestellte Aufgabe bei einer gattungsgemäßen Anordnung zur Befestigung einer Luftspaltwicklung durch die im Kennzeichen des Anspruchs 1 angegebenen Merkmale gelöst. Vorteilhafte Weiterbildungen sind in den Ansprüchen 2 bis 13 angegeben. Dabei betreffen die Ansprüche 2 bis 7 verschiedene Ausführungsformen des Schloßkeils für das Spannschloß, und die Ansprüche 8 bis 10 betreffen die Druckverteilungs- und Federelemente, welche zwischen dem Außenumfang des Stützringes und dem Innenumfang der Stabseiten als Druckübertragungselemente eingefügt sind.

Gemäß Anspruch 11 bestehen die Stützringe bevorzugt aus faserverstärktem Kunstharz (FvK), weil Stützringe aus diesem Material ein verhältnismäßig geringes, d.h. im Vergleich zu Stahl geringes, Gewicht aufweisen und trotzdem erhebliche federelastische Verspannkräfte ausüben können.

Durch den Gegenstand des Anspruchs 12 wird die Unteraufgabe gelöst, die Anordnung nach der Erfindung so weiterzubilden, daß zusätzlich zu der Radialverspannung mittels der Stützringe und unabhängig davon im Bereich der axialen Flucht der Nutzähne eine separat einstellbare tangentiale Verspannung für die Stäbe bzw. die Nutsegmet-Stabgruppen angeordnet und vorgenommen werden kann, ohne daß dafür aufblasbare Druckschläuche innnerhalb von Stabzwischenräumen angeordnet werden müßten.

Ausgehend von der bekannten Anordnung zur Befestigung einer Luftspaltwicklung nach der schon erwähnten DE-PS 29 24 863, bei welcher die Wicklungsstäbe bzw. die Nutsegment-Stabgruppen durch am Kopf der Nutzähne angeordnete Druckstücke unter Vorspannung abgestützt und die Druckstücke durch radial im Bereich der Nutzähne angeordnete und in Widerlagern des Ständerblechpaketes verankerte Spannschrauben gehalten sind, wird die Unteraufgabe durch die im Kennzeichen des Anspruchs 12 angegebenen Merkmale gelöst, wobei eine Weiterbildung der Anordnung nach Anspruch 12 im Anspruch 13 angegeben ist, durch welche an Nachspannen der Tangentialverspannung auch bei montierten Stützringen ermöglicht ist.

Gegenstand der Erfindung ist auch ein Verfahren zur Montage und Demontage einer Anordnung nach den vorerwähnten Ansprüchen 1 bis 13 innerhalb der Ständerbohrung, durch welches die Aufgabe gelöst wird, die Montage der Stützringe auf der gesamten axialen Länge des Ständerblechpaketes damit in Einklang zu bringen, daß die Wicklungsstäbe bzw. die einzelnen Nutsegment-Stabgruppen nur nacheinander am Innenumfang des Ständerblechpaketes montiert werden können, wobei trotz der unvermeidlichen Setzerscheinungen der Stabisolation sowie der Nutbeilagen und Nutzwischenlagen eine definierte Radialverspannung und entsprechend auch eine Tangentialverspannung aufgebracht werden kann.

Diese Aufgabe wird gemäß Anspruch 14 mit einem Verfahren zur Montage und Demontage einer Anordnung nach einem der vorgenannten Ansprüche 1 bis 13 innerhalb der Ständerbohrung durch die im Kennzeichen des Anspruchs 14 angegebenen Merkmale gelöst.

Die mit der Erfindung erzielbaren Vorteile sind vor allem daran zu sehen, daß die Stützringe großflächig und unter gleichmäßiger Kraftübertragung sowie unter Erzeugung hoher radialer Spannkräfte am Innenumfang der Wicklungsstäbe bzw. der Nutsegment-Stabgruppen angreifen, so daß im Verein mit der Tangentialverspannung eine hohe Sicherheit gegen Lockerwerden der Wicklungsstäbe sowohl im Leistungsbetrieb als auch im Kurzschlußfall gewährleistet ist. Die Stützringe sind bequem de- und remontabel, justierbar, prüfbar und nachspannbar.

Im folgenden wird anhand der Zeichnung, in welcher mehrere Ausführungsbeispiele der Erfindung dargestellt sind, diese noch näher erläutert.

Darin zeigt, größtenteils in vereinfachter, schematischer Darstellung:

Fig. 1    in einem achsnormalen Teilschnitt, welcher etwas mehr als einen Quadranten des Umfanges überstreicht, ein erstes Ausführungsbeispiel einer Befestigungsanordnung mit einem Stützring und einem zu seiner Umfangserweiterung dienenden Spannschloß;

Fig. 2    einen axialen Teilschnitt nach der Linie II-II aus Fig. 1;

Fig. 3    in einem achsnormalen Teilschnitt

Fig. 4    das Detail IV aus Fig. 3 vergrößert;

Fig. 5    den Gegenstand nach Fig. 3 mit einem in seinem Durchmesser verringerten Stützring, eingefügt in die Ständerbohrung und zum Ersatz der Schalplatten vorgesehen;

Fig. 6    einen Stützring, der mehr als eine Teilfuge, und zwar eine Fuge zur Montage des Spannschlosses und eine weitere als Trennfuge, aufweist, wobei die Lage der Luftspaltwicklung nur durch eine Ringzone angedeutet ist;

Fig. 7    in radialer Draufsicht auf den Innenumfang eine hydraulische oder pneumatische Spannvorrichtung zum definierten Vorspannen des jeweiligen Stützringes, so daß das zugehörige Spannschloß entsprechend leicht nachgespannt werden kann;

Fig. 8    den Teilschnitt nach der Linie VIII-VIII aus Fig.7;

Fig. 9    einen Stützring mit pfeilspitzenartig einander gegenüberstehenden Flanken und entsprechend pfeilschwanzartig ausgebildeten Gegenflanken des zugehörigen Spannschlosses, wobei die Spannschraube radial orientiert ist;

Fig.10    ein weiteres Ausführungsbeispiel für das Spannschloß, bei dem die Flanken des Stützringes und die Gegenflanken des Spannschlosses so ausgebildet sind wie im Beispiel nach Fig. 9, bei dem jedoch die Spannschraube tangential orientiert ist und mit ihren beiden Gewindeenden in ein Links- bzw. in ein Rechtsgewinde der beiden Spannschloßhälften eingreift;

Fig.11    in einer Axialansicht eine Nut-Zahnanordnung mit eingelegten Wicklungsstäben und anliegendem, vorgespanntem Stützring im Ausschnitt und einer weiteren Ausführung eines Spannschlosses;

Fig.12    die Ansicht XII aus Fig. 11 auf das eingesetzte Spannschloß, wobei ?die axial benachbarten beiden Stützringe und die zugehörigen Spannschlösser im Ausschnitt zu erkennen sind;

Fig.13    in einem axialen Teilschnitt eine Anordnung zur Fixierung des in Achsrichtung gesehen letzten Stützringes;

Fig.14    den Teilschnitt nach der Linie XIV-XIV aus Fig.13,

Fig.15    eine Nut-Zahnpartie entsprechend Fig. 11, wobei jedoch in einem axialen Ankerbolzen des Nutzahns eine radiale Spannschraube verankert ist, die zur Erzeugung einer tangentialen Vorspannung dient;

Fig.16 die radiale Teilansicht XVI aus Fig. 15 mit dem im Grundriß rechteckigen Druckstück;

Fig.17 die Einzelheit XVII aus Fig. 1, d.h. eine weitere Ausführung der Keilverspannung für den Stützring zur Erzeugung radialer Spannkräfte und einer davon unabhängigen Keilverspannung beidseits der Nutzähne zur Erzeugung einer Tangential-Vorspannung für die Wicklung; und

Fig.18 eine Variante der federelastischen Tangential-Verspannung zu Einzelheit XVIII aus Fig. 1 mit einer Nutseiten-Wellfeder zwischen zwei Wicklungskeilen.

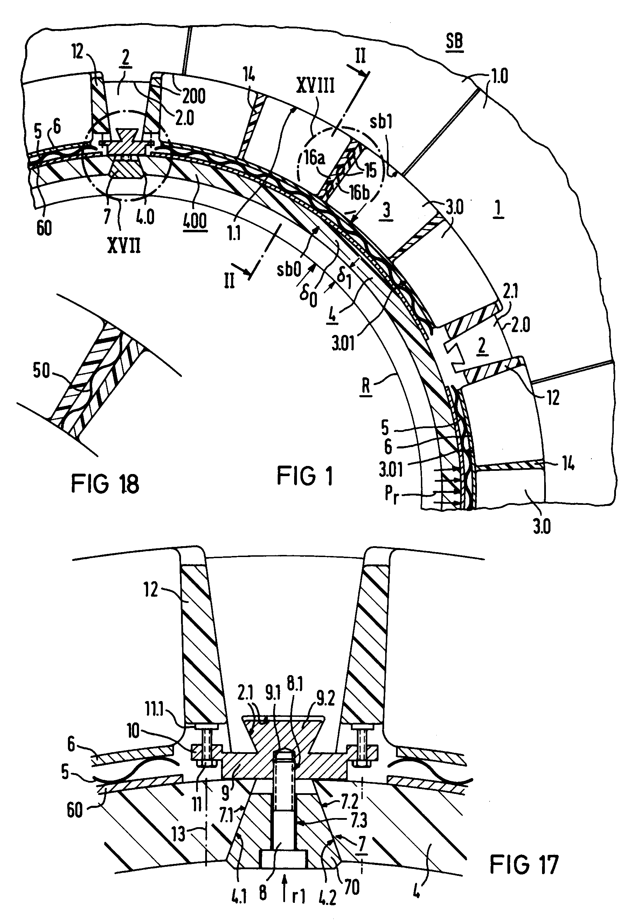

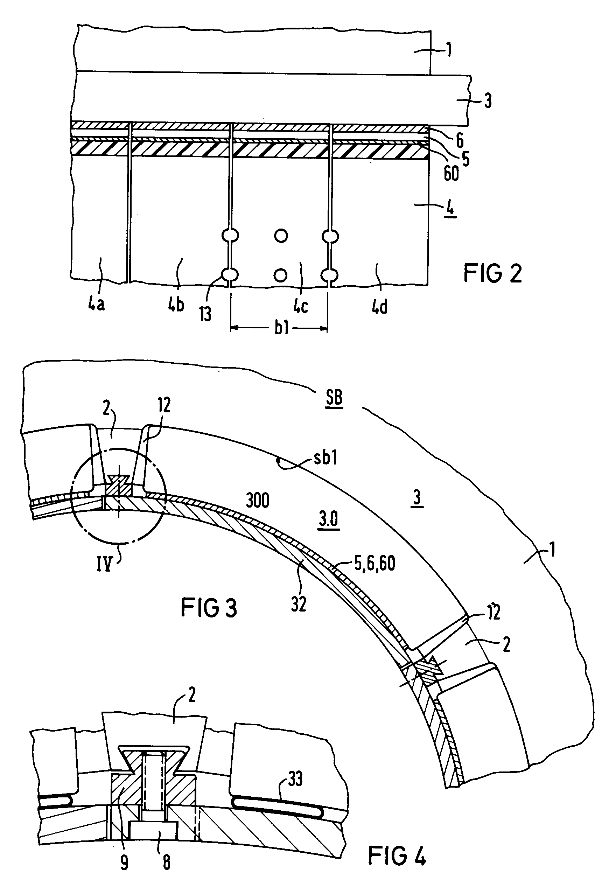

In Fig. 1 und 2 ist ein als Ganzes mit SB bezeichnetes Ständerblechpaket einer dynamoelektrischen Maschine, insbesondere eines Turbogenerators mit Luftspaltwicklung 3 schematisch im Ausschnitt etwa eines Quadranten dargestellt. Die Erfindung befaßt sich mit der Befestigung dieser Luftspaltwicklung 3 am Innenumfang des Ständerblechpaketes SB. Letzteres definiert mit seinem Innenumfang sb0 die Ständerbohrung für den mit Luftspalt $\delta_0$ darin umlaufenden, lediglich mit seinem Umrissen schemenhaft angedeuteten Maschinenrotor R. Das Ständerblechpaket SB ist zusammengesetzt aus einem lamellierten im Querschnitt etwa kreisförmigen Abschirmpaket 1 im sogenannten Jochbereich , dessen einzelne Blechsegmente 1.0 aus magnetischem Material bestehen, und einer am Innenumfang dieses Abschirmpaketes 1 angeordneten Nut-Zahnanordnung 200 mit aus unmagnetischem Blech aufgebauten Nutzähnen 2, wobei die kleinen, im Grundriß etwa trapezförmigen Bleche der Nutzähne jeweils mit den angrenzenden Blechsegmenten 1.0 des Abschirmpaketes 1 im Bereich der Stoßstellen 2.0 starr verbunden sind. Insbesondere erfolgt die Verbindung im Bereich der "Nähte" bzw. Stoßstellen mittels Elektronenstrahlschweißens oder, was noch günstiger ist, mittels Laserschweißens, weil sich dabei unerwünschte Verzugserscheinungen eliminieren lassen. Die Nähte oder Stoßstellen 2.0 liegen im dargestellten Ausführungsbeispiel auf Kreisbögen. Die Erfindung ist aber darauf nicht beschränkt; entscheidend ist, daß die Nut-Zahnanordnung 200 zumindest in der Nähe des Bohrungsbereiches aus unmagnetischem Material, insbesondere aus unmagnetischen Stahlblechen, besteht, wobei die Stoßstellen z.B. auch V- oder W-förmig verlaufen könnten. Der Luftspalt $\delta_0$ ist der magnetische Luftspalt für die Feldlinien. Der mechanschische Luftspalt $\delta_1$ wird noch erläutert.

In die als achsparalle Stabaufnahmenuten sb1 dienenden Umfangszwischenräume, welche in tangentialer Richtung jeweils durch aufeinanderfolgende Nutzähne 2 begrenzt sind, sind die schematisch angedeuteten Wicklungsstäbe 3.0 der Luftspaltwicklung 3 eingefügt und durch eine von der Ständerbohrung sb0 her montierbare und an den der Ständerbohrung zugewandten Wicklungsstabseiten 3.01 flächig anliegende und die Wicklungsstäbe 3.0 gegen den Nutengrund 1.1 pressende Halteeinrichtung 4 in ihrer eingefügten Lage fixiert. Zumindest im radial nicht verspannten Zustand ragen die Wicklungsstäbe 3.0 mit einem radialen Überstand in den Luftspalt, so daß dadurch der Kraftschluß zur Halteeinrichtung hergestellt werden kann.

Wie es Fig. 1 in Verbindung mit Fig. 2 zeigt, weist die als Ganzes mit 400 bezeichnete Halteeinrichtung eine Mehrzahl maschinen-axial aneinandergereihter Stützringe 4, im einzelnen 4a, 4b, 4c, 4d, ... auf. Diese bestehen aus elastisch deformierbarem, nachfederndem Material und sind an mindestens einer Stelle 4.0 ihres Umfanges geteilt (Fig. 1). Aufgrund dieser Teilfuge ist es möglich, die Stützringe jeweils mittels Durchmesservergrößerung in ihrer azimutalen Vorspannung zur Erzeugung einer an den Wicklungsstäben 3.0 angreifenden radialen Vorspannkraft $P_r$, die größer ist als die in radialer Richtung wirkende Betriebskraft, einzustellen. Bei einem Wicklungsstab 3.0 sind die Kraftpfeile $P_r$ zur Veranschaulichung schematisch eingetragen. Damit diese Durchmesserveränderung auf einfache und bequeme Weise sowohl bei der Montage als auch der Demontage und auch beim Nachspannen innerhalb der Ständerbohrung auf einfache Weise verwirklicht werden kann, sind die Stützringe 4 im Bereich mindestens einer ihrer Teilfugen 4.0 mit einem Spannschloß 7 versehen. Zwischen dem Innenumfang der Stützringe 4 und dem Außenumfang des Rotors R ergibt sich der mechanische Luftspalt $\delta_1$ .

Eine erste Ausführung dieses Spannschlosses geht aus dem Detail XVII nach Fig. 17 hervor. Man erkennt, daß die mit Abstand einander gegenüberliegenden Teilfugenflanken 4.1, 4.2 der zum Spannschloß 7 gehörenden Enden des Stützringes 4 von radial innen nach radial außen verjüngt verlaufen, so daß in der axialen Teilansicht nach Fig. 17 eine etwa trapezförmige Grundfläche entsteht, und mit den entsprechend geformten Gegenflanken 7.1 und 7.2 des spannbaren Schloßkeils 70 derart in Angriff bringbar sind, daß bei der Verschiebung des Schloßkeils 70 in Spannrichtung r1 die Flächenpressung zwischen den jeweils aneinanderliegenden Teilfugenflanken 4.1, 4.2 und den zugehörigen Gegenflanken 7.1, 7.2 vergrößert wird. Da sich der Schloßkeil 70 vorzugsweise über die gesamte axiale Länge b1 (Fig. 2) des zugehörigen Stützringes 4 erstreckt, so sind von den Spannschrauben 8 mehrere über diese Länge b1 verteilt anzuordnen, z.B. drei gleichmäßig über die Länge b1 verteilt. Eine solche Spannschraube 8 (Fig. 17) ist in einer entsprechenden radial orientierten Bohrung 7.3 des Schloßkeils 70 gelagert; es ist insbesondere eine Inbusschraube, welche, wie dargestellt, mit ihrem Kopf versenkt im Schloßkeil 70 angeordnet ist. Das Gewindeende 8.1 der Spannschraube 8 greift in eine Gewindebohrung 9.1 der Schloßplatte 9 ein, so daß beim Festziehen der Spannschraube 8 entsprechende azimutale, d.h. in Umfangsrichtung orientierte, Spannkräfte auf den Stützring 4 übertragen werden, welche ihn aufweiten und welche dazu führen, daß von ihm die radialen Spannkräfte $P_r$ am Innenumfang der Luftspaltwicklung 3 angreifen.

Eine Verdrehsicherung für die Schloßplatte 9 erfolgt durch einen gesonderten Schloßplattenteil 9.2, welcher mit einem Schwalbenschwanzprofil in die Schwalbenschwanznut 2.1 des Zahnes 2 formschlüssig eingeschoben ist und mit seitchen "Flügeln" bzw. leistenförmigen Plattenteilen 10 Gewindeaugen für weitere Spannschrauben 11 bildet. Die weiteren Spannschrauben 11 greifen mit den Druckstücken 11.1 an ihren Enden an den radial innenliegenden Kopfflächen der zur Tangentialverspannung dienenden Keile 12 an. Es sind eine Mehrzahl von weiteren Spannschrauben 11 über die axiale Länge der Schloßplatte 9 verteilt in den Gewindebohrungen der seitlichen Plattenteile 10 gelagert, wobei die Schloßplatten 9 mit ihren Plattenteilen 10, 9.2 zweckmäßig in axiale Abschnitte unterteilt sind, z.B. entsprechend der axialen Erstreckung der Stützringe 4. Wenn der anliegende bzw. zugehörige Stützring 4 noch nicht installiert ist, ist die Zugänglichkeit zu den weiteren Spannschrauben 11 vom Bohrungsinnenumfang ohne weiteres gegeben, d.h. die mit ihren Stäben oder Stabgruppen 3.0 in die Stabaufnahmenuten sb1 eingefügter Ständerwicklung kann in tangentialer Richtung mittels der tangentialen Spannkeile 12 und der zugehörigen Spannschrauben 11 tangential vorgespannt werden. Damit ein Nachspannen möglich ist, wenn der zugehörige Stützring 4 installiert ist, können die Stützringe, wie es Fig. 2 zeigt, mit entsprechenden Bohrungen 13 versehen sein.

Aus Fig. 1 erkennt man zusätzlich zu den tangentialen Spannkeilen 12, welche an den Seitenflanken der Nutzähne 2.0 angeordnet sind, noch weitere Zwischenkeile 14. Diese Zwischenkeile 14 bestehen ebenso wie die Spannkeile 12 vorzugsweise aus faserverstärktem Kunststoff (FvK) hoher elektrischer Durchschlagsfestigkeit. In der Mitte der Nut-Zahnanordnung 200 ist in Fig. 1 noch an Stelle eines Zwischenkeiles 14 eine Anordnung von Druckschläuchen 15 angedeutet, um damit zum Ausdruck zu bringen, daß an Stelle von oder zusätzlich zu den tangentialen Spannkeilen 12 auch eine Vorspannung der Wicklung in tangenialer Richtung durch derartige aufblasbare Druckschläuche 15 vorgenommen werden könnte, welche in den Hohlräumen zwischen zwei, vorzugsweise symmetrisch zueinander angeordneten Keilhälften 16a, 16b angeordnet sind. Derartige Druckschläuche können mit einem Druckfluid beaufschlagt werden, wobei der Druck laufend überwacht wird. Als federlastische Tangentialverspannung wird im Rahmen der vorliegenden Erfindung jedoch eine mittels Nutseiten-Wellfedern 50 aus FvK (faserverstärktem Kunststoff) bevorzugt, welche zwischen den Stabgruppen 300 oder Stäben 3.0 und den Keilen 12 oder 14 einzufügen sind (siehe die Variante zur Anordnung 15, 16a, 16b in Fig. 18). Insbesondere mit solchen Nutseiten-Wellfedern 50 ist die Verspannung der Luftspaltwicklung 3 in tangentialer Richtung mittels mechanischer Keilverspannung 11, 12 besonders vorteilhaft, weil hierbei eine laufende Drucküberwachung bzw. Überwachung auf Dichtigkeit nicht erforderlich ist, sondern lediglich ein eventuelles Nachspannen bei einer Revision genügt. Die Nutseiten-Wellfedern sind dabei definiert vorgespannt; sie erhöhen den Reibschluß gegen Pulsationskräfte in radialer Richtung.

In den Figuren 1, 2 und 17 sind mit 5 der federelastischen Radialverspannung dienende weitere Federelemente, im vorliegenden Beispiel Kunststoff-Wellfederstreifen bezeichnet und mit 6 Druckstreifen, welche die zu den Wellfederstreifen 5 weisenden Stabinnenseiten abdecken und die radialen Spannkräfte $P_r$ gleichmäßig auf die Wicklungsstäbe bzw. Stabgruppen verteilen. Es ist zweckmäßig, auf der dem jeweiligen Stützring 4 zugewandten Seite der Kunststoff-Wellfederstreifen 5 weitere Druckstreifen 60 anzuordnen, wie in Fig. 17 angedeutet, um den Stützring 4 vor örtlicher Überlastung zu schützen.

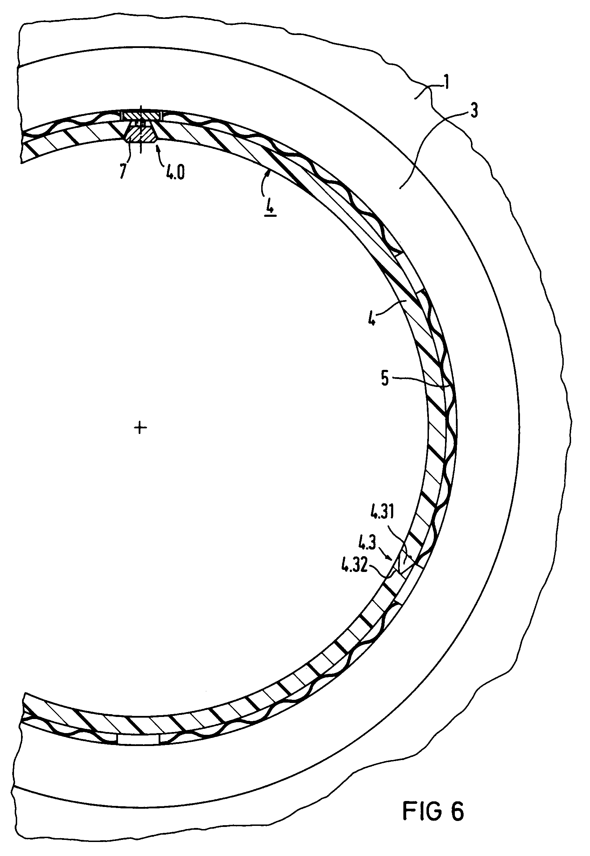

Fig. 6 zeigt stark vereinfacht ein zweites Ausführungsbeispiel, bei welchem der Stützring 4 nicht nur eine Teilfuge 4.0 zur Montage des Spannschlosses 7 aufweist, sondern auch eine weitere Trennfuge 4.3 und im Bereich der anderen Stützring-Hälfte (die nicht dargestellt ist) eine weitere Trennfuge, so daß der Stützring 4 in insgesamt drei Stützring-Bogenstücke zerfällt, welche bei der Montage formschlüssig zu einem gesamten Stützringgewölbe zusammensetzbar sind. Die Trennfuge 4.3 zeigt eine bevorzugte Ausbildung: Die beiden aneinanderstossenden Stützringteile greifen mit einem Pfeilspitzenteil 4.31 und einem Pfeilschwanzteil 4.32 ineinander. Durch diese mehrfach geteilte Anordnung des Stützringes sind Montage und Demontage erleichtert. Im übrigen ist die Anordnung so ausgebildet, wie anhand von Fig. 1, 2 und 17 erläutert.

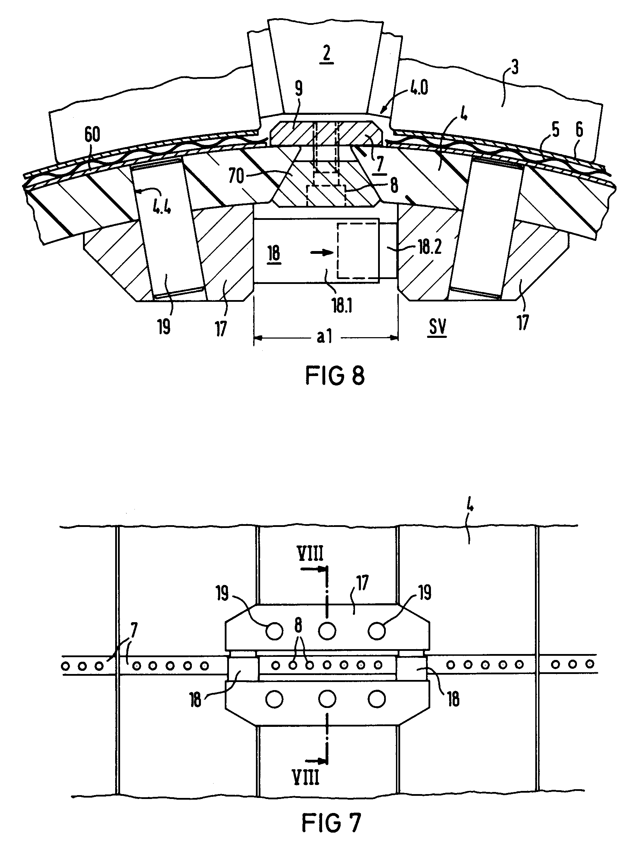

Fig. 7 und 8 zeigen ein Spannschloß 7, welches so ausgebildet ist, wie dasjenige nach Fig. 1, 2 und 17, wobei zur Vereinfachung der Darstellung die Tangential-Verspannungselemente 10, 11, 12 weggelassen sind. Es geht in Fig. 7 und 8 nur im die Erläuterung einer hydraulischen oder pneumatischen Spannvorrichtung SV, welche zwei einander mit Abstand al gegenüberliegende massive Abdrückleisten 17 aufweist, welche in ihrem gegenseitigen Abstand durch zwei an je einem Ende der Leisten angeordnete fluidische Kraftkolben-Zylinder-Systeme 18 veränderbar sind. Der Zylinder ist mit 18.1 und der Kraftkolben mit 18.2 bezeichnet. Die Darstellung ist lediglich schematisch, Fluid-Schläuche und -Ventile zur Betätigung sind weggelassen. Die Abdrückleisten 17, welche in ihrer Außenkontur an die kreisförmige Innenkontur des jeweiligen Stützringes 4 angepaßt sind, sind mittels Ankerbolzen 19 mit den Endbereichen des Stützringes 4 beidseits von dessen Teilfuge 4.0 starr gekuppelt. Wie es Fig. 7 zeigt, sind pro Abdrückleiste 17 drei solche Ankerbolzen 19 vorgesehen, wobei die beiden damit in Eingriff zu bringenden Enden des Stützringes 4 dementsprechend jeweils drei Aufnahmebohrungen 4.4 aufweisen. Durch die hydraulische oder pneumatische Spannvorrichtung SV kann man also den jeweiligen Stützring 4 in seiner azimutalen Richtung aufweiten und dann den Schloßkeil 70 mit seiner Spannschraube 8 nachstellen. Nach dem Nachstellen des Schloßkeils 70 und dem Entlasten der Anordnung 18 kann dann die Spannvorrichtung SV leicht demontiert und beim nächsten, zu spannenden Stützring wieder in Position gebracht werden.

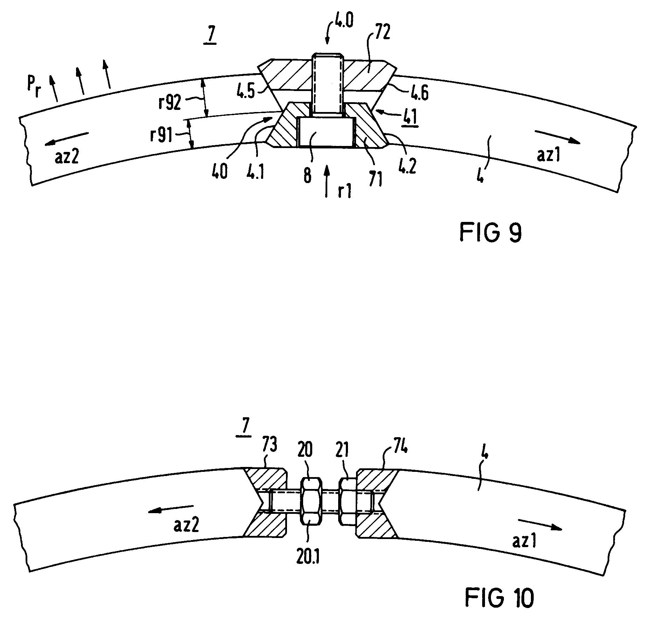

Fig. 9 zeigt die Ausführung eines Spannschlosses 7, bei welchem die mit Abstand einander gegenüberliegenden Teilfugenflanken 4.1, 4.2 der zum Spannschloß gehörenden Enden des Stützringes 4 von radial innen nach radial außen auf mindestens einem Teilstück r91 verjüngt verlaufen und auf einem angrenzenden radialen Teilstück r92 als Flanken 4.5, 4.6 nicht keilförmig verjüngt, sondern keilförmig sich erweiternd verlaufen, so daß die beiden Enden des Stützringes 4 azimutal aufeinandergerichtete pfeilspitzenartige Vorsprünge, die paarweise einander gegenüber liegen, bilden. Die Vorsprünge sind mit 40 und 41 bezeichnet. Pfeilspitzenartige Vorsprünge an den einander gegenüberliegenden Enden des Stützringes 4 haben den Vorteil, daß die an ihnen angreifenden Spannkräfte des Schloßkeiles, der im vorliegenden Fall aus zwei Teilen 71 und 72 besteht, nach innen gerichtete Kraftkomponenten ergeben, wodurch die Enden des Stützringes 4 nicht aufspleißen oder aufgehen können. Der zweite Schloßkeil 72 übernimmt zugleich die Funktion einer Schloßplatte, und er ist wegen seines rechteckigen Grundrisses zugleich an den einander gegenüberliegenden Flanken 4.5, 4.6 verdrehgesichert.

Beim Beispiel nach Fig. 9 werden die in radialer Richtung r1 gerichteten Spannkräfte in azimutaler Aufweitkräfte gemäß den Pfeilen az1, az2 umgeformt, welche wiederum durch Anlage am Innenumfang der Luftspaltwicklung 3 zu den schon erwähnten radialen Verspannkräften $P_r$ führen. Beim Beispiel nach Fig. 10 ist die pfeilspitzenartige Endkontur der Enden des Stützringes 4 beibehalten worden, jedoch weist das Spannschloß 7 hierbei mit pfeilschwanzartigen Ausnehmungen an den Stützring-Enden anliegende Druckstücke 73, 74 auf, welche durch mehrere über ihre axiale Länge verteilte Abdrückschrauben 20 zu der azimutalen Aufweitung des Stützringes 4 in Richtung der Pfeile az1 und az2 führen. Dabei ist die Abdrückschraube 20 zweckmäßigerweise an ihrem einen Ende mit einem Linksgewinde und an ihrem anderen Ende mit einem Rechtsgewinde versehen und in entsprechenden Gewindebohrungen der Druckstücke 73, 74 gelagert, wobei mit 21 noch eine Kontermutter bezeichnet ist. Mithin kann durch Ansetzen eines Gewindeschlüssels an der Mutter 20.1 der Spannschraube 20 eine Aufweitung erzielt werden, wobei aber auch bei dieser Ausführung wegen den hohen Spannkräfte die hydraulische Spannvorrichtung nach Fig. 7 und 8 zum Vorspannen verwendet wird und im aufgeweiteten Zustand dann ein Nachstellen der Spannmutter 20 erfolgt.

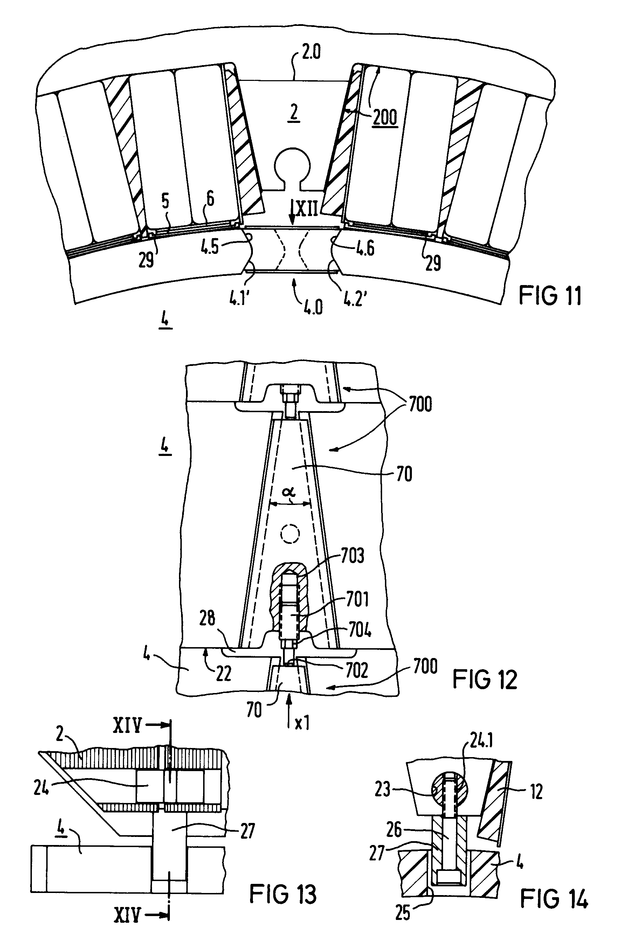

Anhand der Fig. 11 bis 14 wird im folgenden ein viertes Ausführungsbeispiel für ein Spannschloß 700 erläutert, dessen Spannrichtung nicht die radiale Richtung r1 sondern eine parallel zur Maschinenachsrichtung liegende Richtung x1 ist. Der Schloßkeil 70 (vgl. Fig. 12) hat in radialer Richtung seines Einbauzustandes gesehen dabei eine angenähert trapezförmige Grundfläche und weist eine in seine axiale Einschubrichtung x1 weisende, in seiner rückseitigen Endpartie eingelassene Justierschraube 701 auf, mit deren über die Kontur 22 des Stützringes 4 vorkragendem Schaftende 702 der Schloßkeil 70 des Spannschlosses 700 eines axial benachbarten Stützringes 4 zur Anlage bringbar ist. Damit wird erreicht, daß bei in axialer Flucht zueinander angeordneten Spannschlössern 700 der axial aneinandergereihten und montierten Stützringe 4 den in Flucht jeweils vorhergehende Schloßkeil 70 durch den jeweils folgenden Schloßkeil 70 in seiner justierten Position abgesichert ist. Dabei muß der in der axialen Flucht jeweils erste und letzte Stützring 4 an der Nutz-Zahn-Anordnung 200 axial fixiert werden, wie es im folgenden anhand von Fig. 11, 13 und 14 erläutert wird.

Man erkennt aus diesen Figuren den Axialkanal 23 in den Nutzähnen. In diese Axialkanäle 23 von kreisförmigem Querschnitt sind passende zylindrische Widerlagerkörper 24 eingesetzt, welche bevorzugt aus nicht magnetischem Stahl bestehen und deren Mantel so wie deren Gewindebohrung 24.1 mit einer isolierenden Kunststoffschicht versehen ist. Die Widerlagerkörper 24 können auch ganz aus FvK bestehen. Die Gewindebohrung 24.1 der Widerlagerkörper 24 weist genau in die radiale Richtung, so daß durch entsprechende radiale Bohrungen 25 radiale Fixierschrauben 26, verkleidet mit hohlzylindrischen Druckhülsen 27, gesteckt und mit ihren Enden in die Widerlagerkörper 24 eingeschraubt werden können. Die Druckhülsen 27 passen genau in die Bohrungen 25, so daß damit der zugehörige Stützring 4 gegen Axialbewegung blockiert ist. Diese axiale Arretierung nach Fig. 13, 14 wird, wie erwähnt, an den beiden axialen Enden des Ständerblechpaketes SB vorgesehen.

Zurück zum Spannschloß 700 nach Fig. 11 und 12: Man erkennt, daß die Justierschraube 701 als Stiftschraube ausgebildet ist und mit ihrem Gewindeschaft in einem entsprechenden Gewindesackloch 705 der rückseitigen Endpartie des zugehörigen Schloßkeils 70 gelagert ist und ein an den Gewindeschaft angrenzendes freies Ende einen Gewindemehrkant 704 zum Ansetzen von Schraubenschlüsseln o.dgl. aufweist. Auf den Gewindemehrkant 704 folgt dann das schon erwähnte Schaftende 702. Im Bereich des freien Justierschrauben-Endes 702 ist die rückseitige Endpartie des zugehörigen Schloßkeils 70, wie dargestellt, etwas zurückgesetzt, und die anliegende Stirnseite des benachbarten Stützringes 4 ist zwecks Zugänglichkeit zum Gewindemehrkant 704 in Form der Ausnehmung 28 ausgespart. Da die axiale Länge des jeweiligen Stützringes 4 um ein mehrfaches größer ist als seine radiale Stärke, so läßt sich der jeweilige Schloßkeil mit einem kleinen Keilwinkel von 10° (Winkel an der Spitze des Keils) versehen. Ein solch kleiner Keilwinkel ergibt bei dem verwendeten Material von FvK (faserverstärkter Kunststoff) eine Selbsthemmung. Das erleichtert wesentlich Montage und Demontage der Stützringe, indem der montierte und bereits verkeilte Stützring bei den Montagearbeiten keiner weiteren Verriegelung bedarf. Die zusätzliche gegenseitige Verriegelung der Schloßkeile 70 untereinander mit Hilfe der Justierschrauben 701 erfolgt im Hinblick auf die Stoß- und Schwingungskräfte während des Betriebes der elektrischen Maschine.

Die Keilflanken an den Enden des Stützringes im Bereich der Teilfuge 4.0 sind wieder pfeilspitzenartig ausgebildet, jedoch verjüngen sich die Teilfugenflanken 4.1', 4.5' und 4.2', 4.6' in Richtung x1 entsprechend dem angegebenen Keilwinkel und wie gestrichelt aus Fig. 11 ersichtlich. Auch bei dieser Anordnung ist die Verwendung von zusätzlichem hydraulischen Spannwerkzeug nach Fig. 7 und Fig. 8 sinnvoll.

Aus Fig. 11 erkennt man noch ein weiteres Detail: Zwischen den Wellfedern 5 und den Stützringen 4 sind im Querschnitt flach U-förmige Federführungsbetten 29 eingefügt, wobei die Wellfedern 5 von dem U-Kanal der Federführungsbetten aufgenommen sind. Die U-Schenkel der Federführungsbetten 29 ragen dabei radial in jene freien Zwickelräume, die durch die Abrundung der Kanten der Stäbe 3.0 freibleiben. Die Federführungsbetten sorgen immer für eine eindeutige Position der Wellfedern 5.

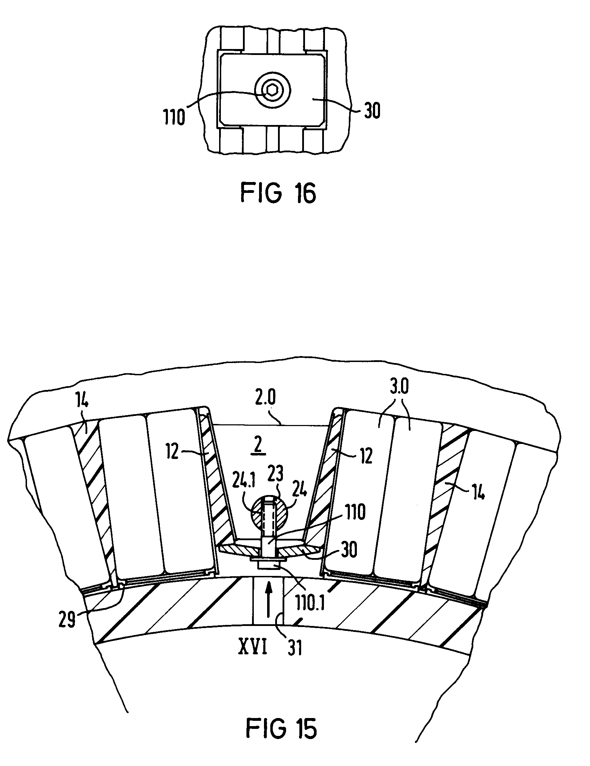

Fig. 15 und 16 zeigen eine im Vergleich zu der Ausführung nach Fig. 1, 2 und 17 modifizierte Anordnung zur tangentialen Verspannung der Luftspaltwicklung 3, bei welcher die Wicklungsstäbe 3.0 bzw. die aus mehreren Stäben zusammengesetzten Nutsegment-Stabgruppen durch am Kopf der Nutzähne 2 angeordnete Druckstücke 30 unter Vorspannung abgestützt und diese Druckstücke 30 durch radial im Bereich der Nutzähne angeordnete und in Widerlagern 24 des Ständerblechpaketes SB verankerte Spannschrauben 110 gehalten sind. Wie man es aus Fig. 15 erkennt, sind die Druckstücke 30 und die Spannschrauben 110 mit ihren Köpfen 110.1 gegenüber den Außenumfang der Stützringe 4 radial nach außen zurückgesetzt. Die Druckstücke 30 greifen zum Zwecke der Tangential-Vorspannung der Wicklungsstäbe 3.0 an den Köpfen von Keilleisten 12 an, welche - so wie bei der ersten Ausführung nach Fig. 1, 2 und 17 - in Keilzwischenräumen zwischen den Nutzähnen 2 und der jeweils anliegenden Wicklungsstabseite eingefügt sind. Die Anordnung der Axialkanäle 23 und der in diese eingefügten zylindrischen Widerlagerkörper 24 mit ihren Gewindebohrungen 24.1 ist so, wie anhand der Figuren 13 und 14 bereits erläutert. In Fig. 11 wurden der Einfachheit halber die Elemente zur Tangentialverspannung weggelassen. Ähnlich der Darstellung nach Fig. 14 ist bei der Tangentialverspannung nach Fig. 15 und 16 in radialer Flucht mit den Köpfen der Spannschrauben 110 jeweils eine Durchbrechung 31 im Stützring 4 vorgesehen, durch welche hindurch Spannwerkzeug an den Köpfen 110.1 der Spannschrauben 110 vom Innenumfang der Ständerbohrung her angesetzt werden kann. Auf diese Weise ist eine Unabhängigkeit der Einstellung der Tangentialverspannung mittels der Spannschrauben 110 und der Radialverspannung mittels der Stützringe 4 und ihrer Spannschlösser 7 bzw. 700 ermöglicht, was wegen der während des Betriebes auftretenden erheblichen pulsierenden radialen und tangentialen Kräfte von besonderer Bedeutung ist. Das Druckstück 30, welches aus Stahl oder aus FvK bestehen kann, ist als Tellerfeder ausgeführt, welche vorgewölbt ist und beim Spannen der Spannschraube 110 sich etwas abflacht, wobei es mit seinen flachen Längskanten an den Köpfen der Keile 12 anliegt und diese in ihre Keilnuten tiefer hineindrückt, so daß dadurch entsprechende tangentiale Verspannkräfte auf die Luftspaltwicklung bzw. ihrer einzelnen Stäbe 3.0 ausgeübt werden.

Fig. 3 bis 5 verdeutlichen noch das bevorzugte Verfahren zur Montage und Demontage einer Anordnung gemäß den vorbeschriebenen Figuren 1, 2, 17 sowie 6 bis 16. Fig. 3 zeigt bogenförmige Schalplatten 32, welche die axiale Breite der später einzufügenden Stützringe 4 und auch in etwa deren radiale Stärke haben. In Umfangsrichtung erstrecken sie sich von einem Zahn 2 zum nächstfolgenden Zahn mit einem gewissen Überstand, damit sie in diesem Bereich mittels der radialen Spannschrauben 8 an den Schloßplatten 9 befestigt werden können. Bevorzugt sind in diesem Zahnbereich einander benachbarte Schalplatten 32 ineinander verzahnt, so daß abwechselnd die eine und die andere Schalplatte 32 mittels der Spannschrauben 8 befestigt werden kann. Der in die Stabaufnahmenuten sb1 eingefügten Nutsegment-Stabgruppen bzw. Stäbe 3.0 der Luftspaltwicklung 3 und den Schalplatten 32 kann die schon erwähnte Sandwich-Anordnung aus Druckstreifen 6, Wellfedern 5 und weiterer Druckstreifen 60 angeordnet sein, was summarisch durch einen schraffierten Streifen zum Ausdruck gebracht ist. Während dieser Vormontage der Luftspaltwicklung 3 kann aber auch eine aus pneumatischen Kissen bestehende Zwischenlage 33 zwischen den Schalplatten 32 und der Luftspaltwicklung 3 angeordnet werden. Ist also die entsprechende Nutsegment-Stabgruppe 300 in ihre Nut sb1 eingelegt, so werden die Schalplatten-Bogenstücke 32 montiert, und dadurch wird die Stabgruppe 300 tangential und radial vorgespannt. Die Mittel zur tangentialen Vorspannung sind in Figuren 3 und 4 nicht dargestellt; diese können so ausgebildet sein, wie anhand von Fig. 17 oder 15 erläutert. Unter dieser Vorspannung und unter Temperatureinwirkung wird dann die betreffende Stabgruppe 300 formiert sowie mit ihrer Wicklungsisolation zum Vorsetzen gebracht, d.h. es wird eine im späteren Betrieb unter elektrischer, mechanischer und Temperatur-Belastung auftretende Formänderung der Stabgruppen 300 bzw. der einzelnen Stäbe 3.0 vorweggenommen. Auf die beschriebene Weise werden sämtliche Nutsegment-Stabgruppen 300 mit den zugehörigen Schalplatten-Bogenstücken 32 auf dem gesamten Innenumfang des Ständerblechpaketes SB zu axial jeweils mit Abstandszwischenräumen aufeinanderfolgenden Umfangsverbänden montiert und die zugehörigen Nutsegment-Stabgruppen 300 zum Formieren und Vorsetzen unter Temperatureinwirkung gebracht.

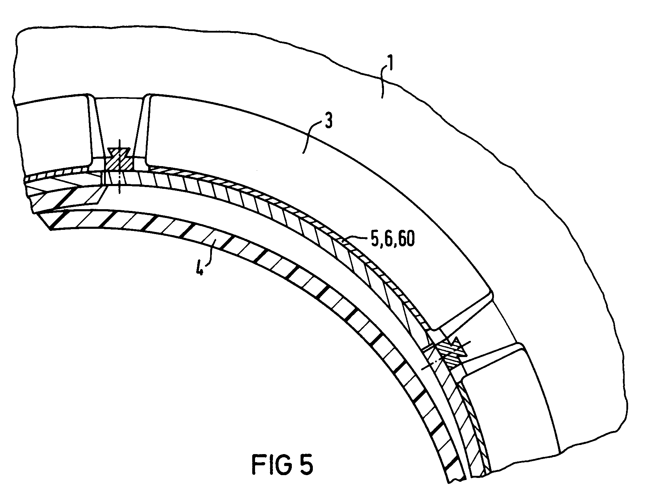

Nun kann man die einzelnen Umfangsverbände der Schalplatten bzw. Schalplatten-Bogenstücke 32 an einem axial äußeren Ende des Ständerblechpaket-Innenumfanges beginnend und nach Innen bzw. zum anderen äußeren Ende fortschreitend jeweils sukzessive demontieren und durch die Stützringe 4 ersetzen. Man kann mit der Demontage der Schalplatten und ihrem sukzessiven Ersatz auch in der Mitte des Ständerblechpaketes beginnen und nach beiden axialen Enden fortschreiten. Fig. 5 zeigt, daß ein in seinem Durchmesser durch Übereinanderschieben seiner Enden verkleinerter Stützring 4 bequem in den vom Innenumfang des Schalplatten-Gewölbes begrenzten Innenraum des Ständerblechpaketes SB eingeschoben werden kann. Nach dem Entfernen des Schalplatten-Gewölbes, welches durch den Stützring 4 ersetzt werden soll, kann letzterer dann montiert werden.

Will man einzelne Stützringe oder alle demontieren, so kann man in umgekehrter Reihenfolge vorgehen und Stützring für Stützring durch entsprechende Schalplatten-Bogenstückanordnungen ersetzen. Wenn dies geschehen ist, dann können zur Entnahme einer bestimmten Nutsegment-Stabgruppe diejenigen Schalplatten-Bogenstücke demontiert werden, die in der axialen Flucht und im Umfangsbereich dieser zu entnehmenden Stabgruppe liegen. Nach der Remontage der betreffenden Stabgruppe oder aber der Montage einer neuen Stabgruppe können die Schalplatten-Bogenstücke dieser axialen Flucht wieder remontiert werden. Dann erfolgt wieder das sukzessive Ersetzen einer Schalplatten-Bogenstückanordnung auf ihrem gesamten Umfang durch einen Stützring in axialen Schritten, bis wieder der gesamte Maschineninnenumfang durch die Stützringe abgestützt ist.

**Patentansprüche**

1.   Anordnung zur Befestigung einer Luftspaltwicklung (3) am Innenumfang des Ständerblechpaketes (SB) von dynamoelektrischen Maschinen großer Leistung, insbesondere von Turbogeneratoren,

    A) wobei das mit seinem Innenumfang (sbo) die Ständerbohrung für den mit Luftspalt ($\delta_0$) umlaufenden Maschinenrotor (R) definierende Ständerblechpaket (SB) zusammengesetzt ist aus:

      A1) einem lamellierten im Querschnitt etwa kreisringförmigen Abschirmpaket (1) im Jochbereich, dessen Blechsegmente (1.0) aus magnetischem Material bestehen,

      A2) und einer am Innenumfang des Abschirmpaketes angeordneten Nut-Zahnanordnung (200), welche zumindest in der Nähe des Bohrungsbereiches aus unmagnetischem Material besteht und an Stoßstellen (2.0), die über den Innenumfang des Abschirmpaketes (1) verteilt sind, mit letzterem starr verbunden ist,

B) wobei in die als achsparallele Stabaufnahmenuten (sb1) dienenden Umfangszwischenräume, welche in tangentialer Richtung jeweils durch aufeinanderfolgende Nutzähne (2) begrenzt sind, die Wicklungsstäbe (3.0) der Luftspaltwicklung (3) mit einem über die Nutzähne (2) in den Luftspalt ($\delta_0$) ragenden radialen Überstand einfügbar und durch eine von der Ständerbohrung her montierbare und an den der Ständerbohrung zugewandten Wicklungsstabseiten (3.01) flächig anliegende und die Wicklungsstäbe gegen den Nutengrund (1.1) pressende Halteeinrichtung (400) in ihrer eingefügten Lage fixierbar sind, **dadurch gekennzeichnet,**

a) daß die Halteeinrichtung (400) eine Mehrzahl maschinenaxial aneinandergereihter Stützringe (4) aufweist, die aus elastisch deformierbarem, nachfederndem Material bestehen, an mindestens einer Stelle ihres Umfanges geteilt sind und mittels Durchmesservergrößerung in ihrer azimutalen Vorspannung zur Erzeugung einer an den Wicklungsstäben (3.0) angreifenden radialen Vorspannkraft ($P_r$), die größer ist als die Betriebskraft, einstellbar sind, und

b) daß die Stützringe (4) zur Durchmesserveränderung bei ihrer Montage und Demontage sowie zum Nachspannen innerhalb der Ständerbohrung im Bereich mindestens einer ihrer Teilfugen (4.0) mit einem Spannschloß (7; 700) versehen sind.

2. Anordnung nach Anspruch 1, **dadurch gekennzeichnet,** daß die mit Abstand einander gegenüberliegenden Teilfugenflanken (4.1, 4.2) der zum Spannschloß (7) gehörenden Stützringen zumindest auf einem Teilstück von radial innen nach radial außen verjüngt verlaufen und mit den entsprechend geformten Gegenflanken (7.1, 7.2) eines spannbaren Schloßkeils (70) in Eingriff bringbar sind, bei dessen Verschiebung in Spannrichtung (r1) die Flächenpressung zwischen den Teilfugenflanken und den Gegenflanken vergrös-sert wird.

3. Anordnung nach Anspruch 2, **dadurch gekennzeichnet,** daß die mit Abstand einander gegenüberliegenden Teilfugenflanken der zum Spannschloß (7) gehörenden Stützringenden von radial innen nach radial außen auf mindestens einem Teilstück (r91) verjüngt bzw. erweitert und auf mindestens einem angrenzenden Teilstück (r92) erweitert bzw. verjüngt verlaufen, so daß die beiden Stützringen azimutal aufeinandergerichtete pfeilspitzenartige Vor- bzw. pfeilschwanzartige Rücksprünge (40, 41), die paarweise einander gegenüberliegen, bilden.

4. Anordnung nach einem der Ansprüche 2 oder 3, **dadurch gekennzeichnet,** daß das Spannschloß durch Relativverschiebung der Schloßkeil-Gegenflanken zu den Teilfugenflanken in radialer Richtung (r1) spannbar ist.

5. Anordnung nach einem der Ansprüche 2 oder 3, **dadurch gekennzeichnet,** daß die einander gegenüberliegenden, in radialer Richtung sich verjüngend bzw. sich erweiternd verlaufenden korrespondierenden Flankenstücke der Stützringenden und des Schloßkeils in einer axialen Einschub- und Spannrichtung (x1) des Schloßkeils (70) sich keilförmig verjüngend verlaufen, mit einem solchen Keilwinkel ( ), daß Selbsthemmung eintritt.

6. Anordnung nach Anspruch 5, **dadurch gekennzeichnet,** daß der Schloßkeil (70) in radialer Richtung seines Einbauzustandes gesehen eine angenähert trapezförmige Grundfläche hat und eine in seine axiale Einschubrichtung weisende in seiner rückseitigen Endpartie eingelassene Justierschraube (701) aufweist, mit deren über die Stützringkontur vorkragendem Schaftende (702) der Schloßkeil (70) des Spannschlosses (700) eines axial benachbarten Stützringes (4) zur Anlage bringbar ist, derart, daß bei in axialer Flucht zueinander angeordneten Spannschlössern (700) der axial aneinandergereihten und montierten Stützringe (4) der in Flucht jeweils vorhergehende durch den jeweils folgenden Schloßkeil (70) in seiner justierten Position abgesichert ist, wobei der in der axialen Flucht jeweils erste und letzte Stützring an der Nut-Zahn-Anordnung (200) axial fixiert ist.

7. Anordnung nach Anspruch 6, **dadurch gekennzeichnet,** daß die Justierschraube (701) als Stiftschraube ausgebildet ist und mit ihrem Gewindeschaft in einem Gewindesackloch (703) der rückseitigen Endpartie des Schloßkeils gelagert ist und ein an den Gewindeschaft angrenzendes freies Ende einen Gewindemehrkant (704) zum Ansetzen von Schraubenschlüsseln sowie das daran angrenzende vorkragende Schaftende (702) aufweist und daß im Bereich des freien Justierschrauben-Endes die rückseitige Endpartie des zugehörigen Schloßkeils (70) und/oder die anliegende Stirnseite des benachbarten Stützringes (4) zwecks Zugänglichkeit zum Gewindemehrkant zurückgesetzt bzw. ausgespart sind.

8. Anordnung nach einem der Ansprüche 1 bis 7, **dadurch gekennzeichnet,** daß zwischen dem Außenumfang der Stützringe (4) und den anliegenden Wicklungsstabseiten (3.01) Federelemente, insbesondere streifenförmige Wellfedern (5) eingefügt sind.

9. Anordnung nach Anspruch 8, **dadurch gekennzeichnet,** daß die Wellfedern (5) zu den Wicklungsstabseiten (3.01) hin mittels Druckstreifen (6) unterlegt sind.

10. Anordnung nach Anspruch 8 oder 9, **dadurch gekennzeichnet,** daß zwischen den Wellfedern (5) und den Stützringen (4) im Querschnitt flach U-förmige Federführungsbetten (29) eingefügt sind, wobei die Wellfedern von dem U-Kanal der Federführungsbetten aufgenommen sind.

11. Anordnung nach einem der Ansprüche 1 bis 10, **dadurch gekennzeichnet,** daß die Stützringe (4) aus faserverstärktem Kunstharz (FvK) bestehen.

12. Anordnung nach einem der Ansprüche 1 bis 11, wobei die Wicklungsstäbe bzw. die Nutsegment-Stabgruppen (300) durch am Kopf der Nutzähne (2) angeordnete Druckstücke unter Vorspannung abgestützt und die Druckstücke durch radial im Bereich der Nutzähne angeordnete und in Widerlagern des Ständerblechpaketes (SB) verankerte Spannschrauben (110) gehalten sind, **dadurch gekennzeichnet,** daß die Druckstücke (30, 11.1) und die Spannschrauben (110, 11) mit ihren Köpfen gegenüber dem Außenumfang der Stützringe (4) radial nach außen zurückgesetzt sind und die Druckstücke (30, 11.1) zur Tangential-Vorspannung der Wicklungsstäbe (3.0) an den Köpfen von Keilleisten (12) angreifen, welche in Keilzwischenräumen zwischen den Nutzähnen (2) und der jeweils anliegenden Wicklungstabseite eingefügt sind.

13. Anordnung nach Anspruch 12, **dadurch gekennzeichnet,** daß in radialer Flucht mit den Köpfen der Spannschrauben (110, 11) Durchbrechungen (31, 30) in den Stützringen (4) vorgesehen sind, durch welche hindurch Spannwerkzeug an den Köpfen der Spannschrauben vom Innenumfang der Ständerbohrung her ansetzbar ist.

14. Verfahren zur Montage und Demontage einer Anordnung nach einem der Ansprüche 1 bis 13 innerhalb der Ständerbohrung, **dadurch gekennzeichnet,** daß zur Montage

a) die zusammen mit Keilleisten (12) und gegebenenfalls Druckstreifen (6, 60, 33) und Nutseiten-Wellfederstreifen (50) in die Stabaufnahmenut (sb1) zwischen zwei aufeinanderfolgenden Nutzähnen (2) eingelegten Wicklungsstäbe (3.0) einer Nutsegmet-Stabgruppe (300) mittels mindestens von Zahnkopf zu Zahnkopf reichender und über die axiale Wicklungsstablänge verteilter Schalplatten-Bogenstücke (32) radial und tangential vorgespannt und unter dieser Vorspannung sowie unter Temperatureinwirkung formiert sowie zum Vorsetzen gebracht werden; daß

b) auf die beschriebene Weise die Nutsegment-Stabgruppen (300) und zugehörigen Schalplatten-Bogenstücke (32) auf dem gesamten Innenumfang des Ständerblechpaketes (SB) zu axial jeweils mit Abstandszwischenräumen aufeinanderfolgenden Umfangsverbänden montiert und die zugehörigen Nutsegment-Stabgruppen (300) zum Formieren und Vorsetzen gebracht werden und daß

c) die einzelnen Umfangsverbände der Schalplatten (32) an einem axial äußeren Ende des Ständerblechpaket-Innenumfanges beginnend und nach innen bzw. zum anderen äusseren Ende fortschreitend jeweils sukzessive demontiert und durch die Stützringe (4) ersetzt werden und daß zur Demontage der Stützringe (4) und/oder einzelner oder aller Nutsegment-Stabgruppen (300) in umgekehrter Reihenfolge sukzessive die Stützringe (4) durch Schalplatten-Bogenstücke (32) ersetzt werden und zur Demontage einzelner Nutsegment-Stabgruppen dann die axiale Flucht derjenigen Schalplatten-Bogenstücke demontiert wird, welche im Umfangsbereich der zu entnehmenden Nutsegment-Stabgruppen liegen.

**Claims**

1. Arrangement for fixing an air-gap winding (3) on the inside circumference of the laminated stator core (SB) of high-power dynamo-electric machines, in particular turbo-generators,

A) wherein the laminated stator core (SB), which with its inside circumference (sbo) defines the stator bore for the machine rotor (R) revolving with air gap ($\delta_0$), is composed of:

A1) a laminated screening packet (1) of approximately circular-annular cross section in the yoke region, the lamination segments (1.0) of which consist of magnetic material,

A2) and a slot and tooth system (200) disposed on the inside circumference of the screening packet, which system, at least in the vicinity of the bore region, consists of non-magnetic material and at abutment points (2.0), which are distributed over the inside circumference of the screening packet (1), is rigidly connected to the screening packet,

B) wherein the winding bars (3.0) of the air-gap winding (3) can be inserted, with a radial excess protrusion projecting beyond the slot teeth (2) into the air gap ($\delta_0$), into the circumferential interstices serving as axially parallel bar-receiving slots (sb1), each defined in the tangential direction by successive slot teeth (2), and can be fixed in their inserted position by means of a retaining device (400) capable of being installed from the stator bore and resting with a large area of contact against the winding bar sides (3.01) oriented toward the stator bore and pressing the winding bars against the slot base (1.1),

characterised in that

a) the retaining device (400) has a multiplicity of support rings (4) in line with one another axially of the machine, which rings consist of elastically deformable, resilient material, are divided at at least one point of their circumference and are adjustable in their azimuthal pre-stressing by means of diameter enlargement in order to generate a radial pre-stressing force ($P_r$), acting on the winding bars (3.0), which force is greater than the operating force, and

b) the support rings (4), for diameter variation upon their assembly and dismantling as well as for post-tensioning, are provided inside the stator bore, in the vicinity of at least one of their dividing seams (4.0), with a turnbuckle (7; 700).

2. Arrangement according to claim 1, characterised in that the dividing seam flanks (4.1, 4.2), facing one another at a distance, of the support rings belonging to the turnbuckle (7) taper from radially inward to radially outward over at least a partial length and can be brought into engagement with the correspondingly shaped counter-flanks (7.1, 7.2) of a tensionable locking wedge (70), upon the displacement of which in the clamping direction (r1) the surface pressure between the dividing seam flanks and the counter-flanks is increased.

3. Arrangement according to claim 2, characterised in that the dividing seam flanks, facing one another at a distance, of the support ring ends belonging to the turnbuckle (7) taper or widen from radially inward to radially outward over at least a partial length (r91) and widen or taper over at least an adjoining partial length (r92), so that the two support rings form arrowhead-like protrusions or arrow-tail-like recesses (40, 41) aligned azimuthally with one another, which face one another in pairs.

4. Arrangement according to one of the claims 2 or 3, characterised in that the turnbuckle can be tensioned by means of relative displacement of the locking wedge counter-flanks with respect to the dividing seam flanks in the radial direction (r1).

5. Arrangement according to one of the claims 2 or 3, characterised in that the facing corresponding flank portions of the support ring ends and of the locking wedge extending in tapering or widening fashion, respectively, in the radial direction extend tapering in wedge-like fashion in an axial insertion and clamping direction (x1) of the locking wedge (70), having a wedge angle ( ) such that self-locking occurs.

6. Arrangement according to claim 5, characterised in that the locking wedge (70), viewed in the radial direction of its installed state, has an approximately trapezoidal base surface and has an adjusting screw (701) oriented in its axial insertion direction, let into its rearward end portion, with the shaft end (702) of which, protruding beyond the contour of the support ring, the locking wedge (70) of the turnbuckle (700) of an axially adjacent support ring (4) can be brought into contact in such a manner that with turnbuckles (700), disposed in axial alignment with one another, of the axially aligned and assembled support rings (4), the preceding locking wedge (70) of a given aligned pair is fixed in its adjusted position by the respectively succeeding locking wedge (70), with the respective first and last support ring in the axial set being axially fixed at the slot and tooth system (200).

7. Arrangement according to claim 6, characterised in that the adjusting screw (701) is embodied as a stud bolt and is supported with its threaded shaft in a threaded blind bore (703) of the rearward end portion of the locking wedge and a free end adjoining the threaded shaft has a threaded polygon (704) for the application of monkey wrenches, as well as having the protruding shaft end (702) adjacent thereto, and that in the vicinity of the free end of the adjusting screw, the rearward end portion of the associated locking wedge (70) and/or the contacting face end of the adjacent support ring (4) is set back or recessed for the sake of accessibility to the threaded polygon.

8. Arrangement according to one of the claims 1 to 7, characterised in that spring elements, in particular strip-like wave springs (5), are inserted between the outside circumference of the support rings (4) and the adjacent winding bar sides (3.01).

9. Arrangement according to claim 8, characterised in that the wave springs (5) are underlaid, toward the winding bar sides (3.01), by means of pressure strips (6).

10. Arrangement according to claim 8 or 9, characterised in that spring guide beds (29) having the cross section of a flat U are inserted between the wave springs (5) and the support rings (4), the wave springs being received by the U-shaped channel of the spring guide beds.

11. Arrangement according to one of the claims 1 to 10, characterised in that the support rings (4) consist of fibre-reinforced synthetic resin (FvK).

12. Arrangement according to one of the claims 1 to 11, wherein the winding bars or the slot segment bar groups (300) are supported with pre-stressing by pressure pieces disposed on the head of the slot teeth (2), and the pressure pieces are retained by means of tensioning screws (110) disposed radially in the vicinity of the slot teeth and anchored in abutments of the laminated stator core (SB), characterised in that the pressure pieces (30, 11.1) and the tensioning screws (110, 11) are radially outwardly set back with their heads with respect to the outside circumference of the support rings (4), and the pressure pieces (30, 11.1), for tangential pre-stressing of the winding bars (3.0), act on the heads of wedge strips (12), which are inserted into wedge interstices between the slot teeth (2) and the respective contacting winding bar side.

13. Arrangement according to claim 12, characterised in that in radial alignment with the heads of the tensioning screws (110, 11), openings (31, 30) in the support rings (4) are provided, through which openings a tensioning tool can be applied to the heads of the tensioning screws, accessing them from the inside circumference of the stator bore.

14. Method for assembly and dismantling of an arrangement according to one of the claims 1 to 13 inside the stator bore, characterised in that for assembly,

a) the winding bars (3.0) of one slot segment bar group (300), which are inserted together with wedge strips (12) and optionally pressure strips (6, 60, 33) and slot-side wave spring strips (50) into the bar-receiving slot (sb1) between two successive slot teeth (2), are radially and tangentially pre-stressed by means of curved lining plate pieces (32) extending at least from one tooth head to the next and distributed over the axial winding bar length, and are lined up as well as made to pre-settle by means of this pre-stressing as well as under the influence of temperature; that

b) in the described manner, the slot segment bar groups (300) and the associated curved lining plate pieces (32) are assembled over the entire inside circumference of the laminated stator core (SB) to make circumferential units that axially succeed one another with respective spacing interstices, and the associated slot segment bar groups (300) are made to line up and pre-settle; and that

c) the individual circumferential units of the lining plates (32) are successively dismantled, beginning at an axially outer end of the laminated stator core inside circumference and proceeding inward or to the other, outer end and are replaced by the support rings (4); and that

for dismantling of the support rings (4) and/or individual ones, or all of the slot segment bar groups (300), the support rings (4) are successively replaced in reverse order with curved lining plate pieces (32), and for dismantling of individual slot segment bar groups, the axial line of the particular curved lining plate pieces, which lie in the circumferential vicinity of the slot segment bar groups to be removed, is dismantled.

**Revendications**

1. Dispositif pour fixer un enroulement d'entrefer (3) sur le pourtour intérieur du paquet de tôles statoriques (SB) de machines dynamo-électriques de grande puissance, notamment de turbo-générateurs, et dans lequel

A) le paquet de tôles statoriques (SB), qui définit par son pourtour intérieur (sbo) l'alésage du stator pour le rotor (R) de la machine, qui tourne avec l'entrefer ($\delta_0$), est constitué par :

A1) un paquet lamellaire de blindage (1) possédant une section transversale approximativement circulaire et disposé dans la zone de la culasse et dont les segments de tôle (1.0) sont réalisés en un matériau magnétique,

A2) et un dispositif à tenons et mortaises (200) qui est disposé sur le pourtour intérieur du paquet de blindage, est constitué, au moins à proximité de la zone de l'alésage, par un matériau amagnétique, et est raccordé rigidement au paquet de blindage (1), au niveau de zones d'aboutement (2.0), qui sont répartis sur le pourtour intérieur des plaquettes de blindage,

B) les barres (3.0) de l'enroulement d'entrefer (3) peuvent être insérées, par une partie saillante radiale qui pénètre dans l'entrefer ($\delta_0$) s'étendant au-delà des tenons (2), dans les espaces intercalaires périphériques, qui sont utilisés en tant qu'encoches (sb1) parallèles à l'axe et logeant les barres et qui sont limités dans la direction tangentielle respectivement par des tenons successifs (2), et peuvent être fixés dans leur position insérée, par un dispositif de retenue (400) qui peut être monté à partir de l'alésage du stator et s'applique à plat contre les côtés (3.01) des barres de l'enroulement, tournées vers l'alésage du stator, et repousse les barres de l'enroulement contre le fond (1.1) des encoches,

caractérisé par le fait

a) que le dispositif de retenue (400) possède une multiplicité d'anneaux de support (4) qui sont disposés côte-à-côte dans le sens axial de la machine et sont constitués par un matériau plastique, qui peut être déformé élastiquement, et sont subdivisés au moins en un emplacement de leur pourtour, et dont la précontrainte azimutale peut être réglée au moyen d'un accroissement du diamètre, afin de produire une force radiale de précontrainte ($P_r$), qui s'applique aux barres (3.0) de l'enroulement et est supérieure à la force de service, et

b) que les anneaux de support (4) comportent, pour la modification du diamètre lors de leur montage et de leur démontage ainsi que pour le serrage ultérieur, un manchon de serrage (7;700) disposé à l'intérieur de l'alésage du stator, dans la zone d'au moins un de leurs joints (4.0).

2. Dispositif suivant la revendication 1, caractérisé par le fait que les flancs (4.1,4.2), qui sont situés réciproquement en vis-à-vis à une certaine distance, des joints des anneaux de support appartenant au manchon de serrage (7), se rétrécissent au moins sur une partie du côté intérieur du point de vue radial en direction du côté extérieur du point de vue radial, et peuvent être amenés à engrener avec les flancs antagonistes possédant des formes correspondantes (7.1,7.2) d'une clavette de fermeture (70) pouvant être serrée, lors du déplacement de laquelle, dans la direction de serrage (r1), la pression superficielle entre les flancs des joints et les flancs antagonistes est accrue.

3. Dispositif suivant la revendication 2, caractérisé par le fait que les flancs des joints, qui sont situés réciproquement en vis-à-vis à une certaine distance, des extrémités des anneaux de support, qui font partie du manchon de serrage (7), se rétrécissent ou s'élargissent depuis l'intérieur du point de vue radial en direction de l'extérieur du point de vue radial, sur au moins une partie (r91), et s'élargissent ou se rétrécissent sur au moins une partie contigüe (r92) de sorte que les deux anneaux de support forment des parties saillantes en forme de têtes de flèches et des évidements en forme de queue d'aronde (40,41), qui sont situés réciproquement en vis-à-vis par couples et sont alignés les uns sur les autres du point de vue azimutal.

4. Dispositif suivant l'une des revendications 2 ou 3, caractérisé par le fait que le manchon de serrage peut être serré dans la direction radiale (r1) au moyen d'un déplacement relatif des flancs antagonistes de la clavette de serrage par rapport aux flancs des joints.

5. Dispositif suivant l'une des revendications 2 ou 3, caractérisé par le fait que les éléments correspondants des flancs des extrémités de l'anneau de support et de la clavette de serrage, qui sont réciproquement en vis-à-vis et se rapprochent ou s'élargissent dans la direction radiale, se rapprochent avec une forme en coin dans une direction axiale d'insertion et de serrage (x) de la clavette de serrage (70), avec un angle de coin (x) tel qu'il se produit un autoblocage.

6. Dispositif suivant la revendication 5, caractérisé par le fait que la clavette de serrage (70) possède, lorsqu'on regarde dans la direction radiale lorsqu'elle est à l'état monté, une surface de base approximativement trapézoïdale, et possède une vis d'ajustement (701) qui est dirigée dans sa direction axiale d'insertion et est évidée dans sa partie d'extrémité arrière et au moyen de laquelle la clavette de serrage (70) du manchon de serrage (700) d'un anneau de support (4) voisin axialement peut venir s'appliquer par-dessus l'extrémité en forme de tige (702), qui fait saillie par rapport au contour de l'anneau de support, de sorte que, dans le cas de manchons de serrage (700) alignés axialement les uns sur les autres, des anneaux de support (4) disposés axialement les uns à côté des autres et montés, la clavette de serrage (70), qui est dans une position précédente dans l'ensemble aligné, est bloquée dans sa position ajustée par la clavette de serrage (70) respectivement suivante, auquel cas respectivement les premier et dernier anneaux de support dans l'ensemble aligné axialement sont fixés axialement sur le dispositif à tenons et mortaises (200).

7. Dispositif suivant la revendication 6, caractérisé par le fait que la vis d'ajustement (701) est réalisée sous la forme d'un goujon fileté et est insérée par sa tige filetée dans un trou taraudé borgne (703) de la partie d'extrémité arrière de la clavette de serrage et possède, au niveau de son extrémité libre jouxtant la tige filetée, un contour polygonal (704) pour l'application d'une clé à douille, ainsi que l'extrémité saillante (702) de la tige, qui lui est contiguë, et que dans la zone de l'extrémité libre de la vis d'ajustement, la partie d'extrémité arrière de la clavette de serrage associée (70) et/ou la face frontale appliquée de l'anneau de support voisin (4) sont en retrait ou évidées de manière à permettre l'accès à l'élément polygonal.

8. Dispositif suivant l'une des revendications 1 à 7, caractérisé par le fait que des éléments de ressort, notamment des ressorts ondulés en forme de bandes (5) sont insérés entre le pourtour extérieur des données de support (4) et les côtés appliqués (3.0) des barres de l'enroulement.

9. Dispositif suivant la revendication 8, caractérisé par le fait que des bandes de compression (6) sont intercalées entre les ressorts ondulés (5) et les côtés (3.0) des barres de l'enroulement.

10. Dispositif suivant la revendication 8 ou 9, caractérisé par le fait qu'entre les ressorts ondulés (5) et les anneaux de support (4) sont insérés des logements en forme de U (29) de guidage des ressorts, qui possèdent une section transversale plate, les ressorts ondulés étant logés dans le canal en U des logements de guidage des ressorts.

11. Dispositif suivant l'une des revendications 1 à 10, caractérisé par le fait que les anneaux de support (4) sont réalisés en une matière plastique renforcée par des fibres (FvK).

12. Dispositif suivant l'une des revendications 1 à 11, dans lequel les barres de l'enroulement ou les groupes (300) de barres des segments de mortaises sont soutenus sous l'application d'une précontrainte par des éléments de compression montés sur la tête des tenons (2), et les éléments de compression sont maintenus par des vis de serrage (110) qui sont disposées radialement dans la zone des tenons et sont ancrées dans des butées du paquet de tôles statoriques (SB), caractérisé par le fait que les têtes des éléments de compression (11, 11.1) et les vis de serrage (110, 11) sont rétractées radialement vers l'extérieur par rapport au pourtour extérieur des anneaux de support (4) et que les éléments de compression (30, 11.1) s'appliquent, pour réaliser la précontrainte tangentielle des barres (3.0) de l'enroulement, contre les têtes de barrettes en coin (12), qui sont insérées dans les espaces intercalaires en coin présents entre les tenons (2) et le côté respectivement contigu de la barre de l'enroulement.

13. Dispositif suivant la revendication 12, caractérisé par le fait qu'il est prévu, dans une position alignée radialement avec les têtes des vis de serrage (110,111), des passages (31,30) ménagés dans les anneaux de support (4) et à travers lesquels un outil de serrage peut être appliqué sur les têtes des vis de serrage à partir du pourtour intérieur du perçage du stator.

14. Procédé pour monter et démonter un dispositif suivant l'une des revendications 1 à 13 à l'intérieur du perçage du stator, caractérisé par le fait que pour le montage

a) les barres (3.0) de l'enroulement, insérées conjointement avec des barrettes en coin (12) et éventuellement avec des bandes de compression (6,60,33) et des bandes de ressort ondulé côté mortaises (50) dans l'encoche (sb1) de logement des barres, entre deux tenons successifs (2), d'un groupe (300) de barres de segments de mortaises, à l'aide au moins d'éléments en forme d'arcs de cercle (32) de plaques enveloppes, réparties sur la longueur axiale des barres de l'enroulement, sont précontraints radialement et tangentiellement et, sous l'effet de cette précontrainte ainsi que de l'action de la température, sont formés et placés dans une position préalable;

b) de la manière décrite, les groupes (300) de barres de segments de mortaises et les éléments en forme d'arcs de cercle associés (32) des plaques enveloppes sont mis en place sur l'ensemble du pourtour intérieur du paquet de tôles statoriques (SB) pour former des ensembles circonférentiels qui se succèdent respectivement axialement moyennant la présence d'espaces intercalaires, et les groupes associés (300) de barres de segments de mortaises sont mis en forme et prépositionnés, et

c) les différents ensembles circonférentiels des plaques enveloppes (32) sont respectivement démontés successivement en commençant à une extrémité, extérieure du point de vue axial, du pourtour intérieur du paquet de tôles statoriques, et ce respectivement successivement de manière continue à l'intérieur dans la direction de l'autre extrémité extérieure, et sont remplacés par les anneaux de support (4), et que pour le démontage des anneaux de support (4) et/ou de groupes individuels ou de tous les groupes (300) de barres de segments de mortaises, on remplace successivement, selon la séquence inverse, les anneaux de support (4) par des éléments en forme d'arcs de cercle (32) de plaques enveloppes et, pour le démontage de groupes individuels de barres de segments de mortaises, on démonte alors l'ensemble aligné axialement des éléments en forme d'arcs de cercle des plaques enveloppes, qui sont situés dans la zone circonférentielle des groupes de barres de segments de mortaises, qui doivent être retirés.

FIG 18

FIG 1

FIG 17

FIG 2

FIG 3

FIG 4

FIG 5

FIG 6

FIG 8

FIG 7

FIG 9

FIG 10

FIG 11

FIG 12

FIG 13

FIG 14

FIG 16

FIG 15